# EUROPÄISCHE PATENTSCHRIFT

(11) **EP 2 675 597 B1**
(45) Veröffentlichungstag und Bekanntmachung des Hinweises auf die Patenterteilung: **03.01.2018**
(21) Anmeldenummer: 12702508.8
(22) Anmeldetag: 01.02.2012
(51) Int. Cl.: B25F 5/00

(54) **HANDWERKZEUGMASCHINE MIT EINEM UNTERSETZUNGSGETRIEBE**
HAND-POWER TOOL WITH A REDUCTION GEAR
MACHINE-OUTIL PORTATIVE À DÉMULTIPLICATEUR

(30) Priorität: 15.02.2011 DE 102011004126
(43) Veröffentlichungstag der Anmeldung: 25.12.2013
(73) Patentinhaber: Robert Bosch GmbH, 70442 Stuttgart (DE)
(72) Erfinder: WINDSHEIMER, Ralf, 70176 Stuttgart (DE); ROEHM, Heiko, 70176 Stuttgart (DE)
(86) Internationale Anmeldenummer: PCT/EP2012/051685
(87) Internationale Veröffentlichungsnummer: WO 2012/110321

(56) Entgegenhaltungen:
- EP-A1- 1 946 895
- DE-A1-102005 037 254
- DE-U1-202004 004 749
- GB-A- 2 058 253
- US-A1- 2007 023 196
- US-B1- 6 796 921

## Beschreibung

### Stand der Technik

Die vorliegende Erfindung betrifft eine Handwerkzeugmaschine mit einem von einem Motor antreibbaren Untersetzungsgetriebe zum Antrieb einer Antriebswelle, wobei das Untersetzungsgetriebe in einem Getriebegehäuse angeordnet ist und über eine Gangschaltung mindestens zwischen einem ersten Gang mit vergleichsweise hohem Drehmoment und einem zweiten Gang mit vergleichsweise niedrigem Drehmoment umschaltbar ist. Beispiele sind aus der DE202004004749U1 oder US2007023196A1 bekannt. Aus dem Stand der Technik sind derartige Handwerkzeugmaschinen bekannt, die ein Untersetzungsgetriebe zum Antrieb einer Antriebswelle aufweisen, mit dem eine vorgegebene Motordrehzahl in einen für eine jeweilige Anwendung erforderlichen Drehzahlbereich der Antriebswelle untersetzt werden kann. Beispielsweise werden bei Akku-Schraubern, Akku-Bohrschraubern und/oder Akku-Schlagbohrmaschinen Motordrehzahlen von etwa 20.000 U/min in einen Drehzahlbereich von etwa 150 bis 2.000 U/min untersetzt. Die Untersetzungsgetriebe werden z. B. als mehrstufige Planetengetriebe mit mindestens zwei Gängen ausgeführt, sodass ein Benutzer einer derartigen Handwerkzeugmaschine diese beispielsweise zwischen einem ersten, langsameren Gang mit vergleichsweise hohem Drehmoment und einem zweiten, schnelleren Gang mit vergleichsweise niedrigem Drehmoment umschalten können. Darüber hinaus kann dem Untersetzungsgetriebe eine Drehmomentkupplung zugeordnet sein, mit der ein Antreiben der Antriebswelle durch das Untersetzungsgetriebe im Betrieb der Handwerkzeugmaschine verhindert werden kann, falls ein von der Antriebswelle auf das Untersetzungsgetriebe übertragenes Drehmoment einen von einem Benutzer einstellbaren Schwellwert überschreitet.

Nachteilig am Stand der Technik ist, dass z. B. bei Akku-Bohrschraubern die Drehmomentkupplung bzw. eine von der Drehmomentkupplung bereitgestellte Kupplungsfunktionalität im Bohrmodus deaktiviert wird und somit der vom Benutzer einstellbare Schwellwert faktisch auf "unendlich" gesetzt wird. Falls der auf Bohrmodus eingestellte Akku-Bohrschrauber dennoch zum Schrauben verwendet wird, kann z. B. bei sogenannten harten Schraubfällen, die beispielsweise bei Metallverschraubungen auftreten und eine spontane Blockierung der Antriebswelle bewirken können, eine der Antriebswelle zugeführte Rotationsenergie in eine Rotation des Akku-Bohrschraubers bzw. eines diesem zugeordneten Werkzeuggehäuses umgesetzt werden. Dies kann eine stoßartige Belastung von Bauteilen eines dem Akku-Bohrschrauber zugeordneten Antriebsstrangs bewirken und zu einem Versagen von involvierten Bauteilen des Antriebsstrangs führen.

### Offenbarung der Erfindung

Eine Aufgabe der Erfindung ist es daher, eine neue Handwerkzeugmaschine bereit zu stellen, bei deren Betrieb unabhängig von einem eingestellten Betriebsmodus eine Zuführung einer vergleichsweise großen Rotationsenergie über deren Antriebswelle zu einem zugeordneten Werkzeuggehäuse zumindest eingeschränkt werden kann.

Dieses Problem wird gelöst durch eine Handwerkzeugmaschine mit einem von einem Motor antreibbaren Untersetzungsgetriebe zum Antrieb einer Antriebswelle, wie im Anspruch 1 dargestellte. Das Untersetzungsgetriebe ist in einem Getriebegehäuse angeordnet und über eine Gangschaltung mindestens zwischen einem ersten Gang mit vergleichsweise hohem Drehmoment und einem zweiten Gang mit vergleichsweise niedrigem Drehmoment umschaltbar. Dem Untersetzungsgetriebe ist eine mechanische Überlastschutzvorrichtung zugeordnet, die dazu ausgebildet ist, das Untersetzungsgetriebe im Betrieb der Handwerkzeugmaschine zu limitieren, falls ein von der Antriebswelle auf das Untersetzungsgetriebe übertragenes Drehmoment einen maschinenspezifischen Grenzwert überschreitet.

Die Erfindung ermöglicht somit die Bereitstellung einer Handwerkzeugmaschine, bei deren Betrieb eine Zuführung einer exzessiven Rotationsenergie über deren Antriebswelle zu einem der Handwerkzeugmaschine zugeordneten Werkzeuggehäuse sicher und zuverlässig verhindert werden kann.

Gemäß Anspruch 1 ist dem Untersetzungsgetriebe eine Drehmomentkupplung zugeordnet, die dazu ausgebildet ist, ein Antreiben der Antriebswelle durch das Untersetzungsgetriebe im Betrieb der Handwerkzeugmaschine zu verhindern, falls ein von der Antriebswelle auf das Untersetzungsgetriebe übertragenes Drehmoment einen von einem Benutzer der Handwerkzeugmaschine einstellbaren Schwellwert überschreitet. Der maschinenspezifische Grenzwert ist bevorzugt größer als ein maximaler, von dem Benutzer der Handwerkzeugmaschine einstellbarer Schwellwert.

Somit kann auf einfache Art und Weise eine Handwerkzeugmaschine bereitgestellt werden, die einerseits durch den maschinenspezifischen Überlastschutz gegen eine Übertragung eines Benutzer-unabhängig vorgegebenen, vergleichsweise großen Drehmoments von der Antriebswelle auf das Werkzeuggehäuse geschützt ist, und andererseits durch die von einem Benutzer betätigbare Drehmomentkupplung gegen eine Übertragung eines von dem Benutzer zumindest innerhalb vorgegebener Grenzen einstellbaren, vergleichsweise kleinen Drehmoments geschützt werden kann.

Gemäß einer Ausführungsform ist das Untersetzungsgetriebe nach Art eines Planetengetriebes mit mindestens drei Planetenstufen ausgebildet. Die Überlastschutzvorrichtung ist bevorzugt einer Planetenstufe zugeordnet, die weder mit der Gangschaltung noch mit der Drehmomentkupplung unmittelbar verbunden ist.

Die Erfindung ermöglicht somit die Bereitstellung eines soliden und kleinen Untersetzungsgetriebes mit einer robusten Überlastschutzvorrichtung.

Die Planetenstufe, der die Überlastschutzvorrichtung zugeordnet ist, ist bevorzugt dem Motor zugewandt.

Somit kann die Überlastschutzvorrichtung auf einfache Art und Weise an dem Planetengetriebe ausgebildet werden.

Die Planetenstufe, der die Überlastschutzvorrichtung zugeordnet ist, weist bevorzugt ein Hohlrad auf, das über mindestens ein Rastfederelement mit dem Getriebegehäuse gekoppelt ist.

Somit kann eine unkomplizierte und kostengünstige Überlastschutzvorrichtung bereitgestellt werden.

Gemäß einer Ausführungsform ist das Hohlrad für den Fall eines von der Antriebswelle auf das Untersetzungsgetriebe übertragenen Drehmoments bis zum Erreichen des maschinenspezifischen Grenzwerts drehfest in dem Getriebegehäuse angeordnet und kann sich bei Überschreiten des maschinenspezifischen Grenzwerts in dem Getriebegehäuse um eine der Antriebswelle zugeordnete Längsachse drehen.

Die Erfindung ermöglicht somit die Bereitstellung einer sicheren und zuverlässigen Überlastschutzvorrichtung.

Das mindestens eine Rastfederelement ist bevorzugt radial auswärts federnd an dem Hohlrad angeordnet. Alternativ hierzu kann das mindestens eine Rastfederelement radial einwärts federnd gegen das Hohlrad beaufschlagt sein.

Somit kann eine einfache und robuste Überlastschutzvorrichtung bereitgestellt werden.

Gemäß einer Ausführungsform ist in radialer Richtung zwischen dem Hohlrad und dem Getriebegehäuse ein drehfest mit dem Getriebegehäuse verbundener Rastkörper vorgesehen.

Die Erfindung ermöglicht somit eine solide, mittelbare Verrastung des Rastfederelements am Getriebegehäuse im Normalbetrieb der Handwerkzeugmaschine.

Das Eingangs genannte Problem wird auch gelöst durch eine mechanische Überlastschutzvorrichtung für eine Handwerkzeugmaschine, die ein von einem Motor antreibbares Untersetzungsgetriebe zum Antrieb einer Antriebswelle aufweist, wobei das Untersetzungsgetriebe in einem Getriebegehäuse angeordnet ist und über eine Gangschaltung mindestens zwischen einem ersten Gang mit vergleichsweise hohem Drehmoment und einem zweiten Gang mit vergleichsweise niedrigem Drehmoment umschaltbar ist. Die Überlastschutzvorrichtung ist dazu ausgebildet, das Untersetzungsgetriebe im Betrieb der Handwerkzeugmaschine zu limitieren, falls ein von der Antriebswelle auf das Untersetzungsgetriebe übertragenes Drehmoment einen maschinenspezifischen Grenzwert überschreitet.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine schematische Ansicht einer Handwerkzeugmaschine gemäß einer Ausführungsform,
Fig. 2 eine vergrößerte Schnittansicht eines Ausschnitts der Handwerkzeugmaschine von Fig. 1,
Fig. 3 eine perspektivische Ansicht eines Ausschnitts der Handwerkzeugmaschine von Fig. 1, und
Fig. 4 eine Schnittansicht der Handwerkzeugmaschine von Fig. 1, gesehen längs einer Linie IV-IV von Fig. 2.

### Beschreibung der Ausführungsbeispiele

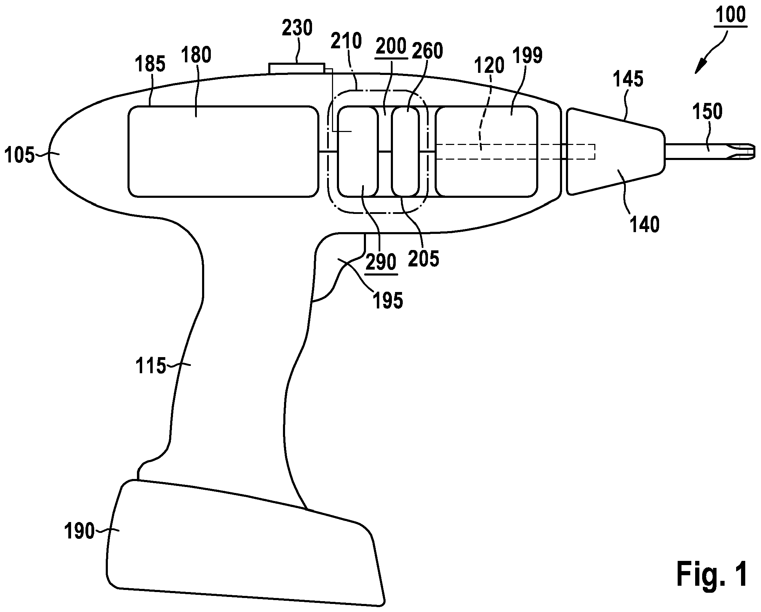

Fig. 1 zeigt eine beispielhafte Handwerkzeugmaschine 100, die ein Werkzeuggehäuse 105 mit einem Handgriff 115 aufweist. Gemäß einer Ausführungsform ist die Handwerkzeugmaschine 100 zur netzunabhängigen Stromversorgung mechanisch und elektrisch mit einem Akkupack 190 verbindbar. In Fig. 1 ist die Handwerkzeugmaschine 100 beispielhaft als Akku-Bohrschrauber ausgebildet. Es wird jedoch darauf hingewiesen, dass die vorliegende Erfindung nicht auf Akku-Bohrschrauber beschränkt ist, sondern vielmehr bei unterschiedlichen Handwerkzeugmaschinen Anwendung finden kann, bei denen ein Werkzeug in Drehungen versetzt wird, unabhängig davon, ob die Handwerkzeugmaschine netzabhängig oder netzunabhängig mit dem Akkupack 190 betreibbar ist, z. B. bei einem Schrauber oder Akku-Schrauber, einer Schlagbohrmaschine oder Akku-Schlagbohrmaschine usw.

In dem Werkzeuggehäuse 105 sind ein von dem Akkupack 190 mit Strom versorgter, elektrischer Antriebsmotor 180 und ein Getriebe 200 angeordnet. Der Antriebsmotor 180 ist über das Getriebe 200 mit einer Antriebswelle 120, z. B. einer Antriebsspindel, verbunden. Der Antriebsmotor 180 ist illustrativ in einem Motorgehäuse 185 angeordnet und das Getriebe 200 in einem Getriebegehäuse 205, wobei das Getriebegehäuse 205 und das Motorgehäuse 185 beispielhaft in dem Werkzeuggehäuse 105 angeordnet sind. Dem Getriebe 200 ist eine Werkzeugaufnahme 140 zugeordnet, die beispielhaft ein Bohrfutter 145 aufweist. Diese Werkzeugaufnahme 140 dient zur Aufnahme eines Werkzeugs 150 und kann an die von dem Antriebsmotor 180 über das Getriebe 200 antreibbare Antriebswelle 120 angeformt sein oder aufsatzförmig mit dieser verbunden sein.

Der Antriebsmotor 180 ist z. B. über einen Handschalter 195 betätigbar, d. h. ein- und ausschaltbar, und kann ein beliebiger Motortyp sein, z. B. ein elektronisch kommutierter Motor oder ein Gleichstrommotor. Vorzugsweise ist der Antriebsmotor 180 derart elektronisch steuer- bzw. regelbar, dass sowohl ein Reversierbetrieb, als auch Vorgaben hinsichtlich einer gewünschten Drehgeschwindigkeit realisierbar sind. Die Funktionsweise und der Aufbau eines geeigneten Antriebsmotors sind aus dem Stand der Technik hinreichend bekannt, sodass hier zwecks Knappheit der Beschreibung auf eine eingehende Beschreibung verzichtet wird.

Das Getriebe 200 ist gemäß einer Ausführungsform ein Untersetzungsgetriebe, z. B. ein mit verschiedenen Planetenstufen ausgebildetes Planetengetriebe, dem optional eine Drehmomentkupplung 199 zugeordnet ist. Die Drehmomentkupplung 199 ist dazu ausgebildet ist, ein Antreiben der Antriebswelle 120 durch das Untersetzungsgetriebe 200 im Betrieb der Handwerkzeugmaschine 100 zu verhindern, falls ein von der Antriebswelle 120 auf das Untersetzungsgetriebe 200 übertragenes Drehmoment einen von einem Benutzer der Handwerkzeugmaschine 100 einstellbaren Schwellwert überschreitet.

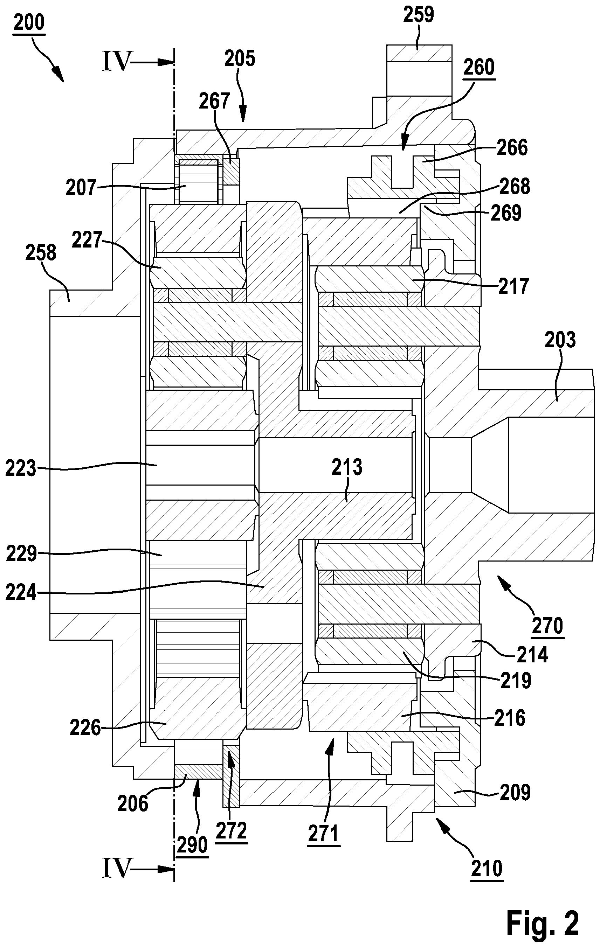

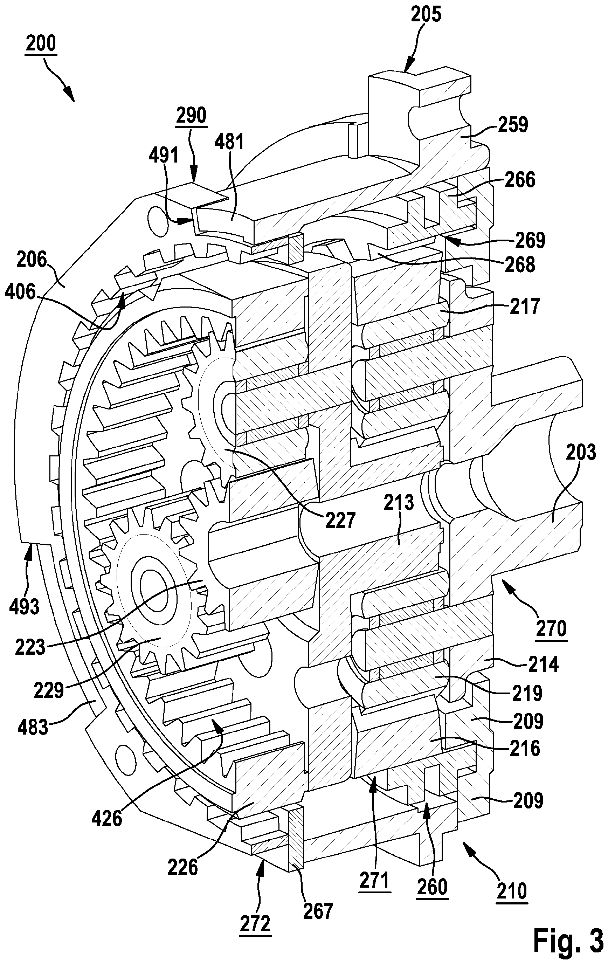

Darüber hinaus ist dem Untersetzungsgetriebe 200 eine über ein zugeordnetes Betätigungselement 230 betätigbare Gangschaltung 260 zugeordnet, sodass das Untersetzungsgetriebe 200 mindestens zwischen einem ersten Gang mit vergleichsweise hohem Drehmoment und einem zweiten Gang mit vergleichsweise niedrigem Drehmoment umschaltbar ist. Im Betrieb der Handwerkzeugmaschine 100 wird das Untersetzungsgetriebe 200 vom Antriebsmotor 180 drehend angetrieben. Das illustrativ als Planetengetriebe ausgebildete Untersetzungsgetriebe 200 wird unten stehend in Bezug auf eine in Fig. 2 vergrößert dargestellte Schnittansicht sowie eine in Fig. 3 vergrößert dargestellte perspektivische Ansicht eines Ausschnitts 210 der Handwerkzeugmaschine 100 im Detail beschrieben.

Gemäß einer Ausführungsform ist dem Untersetzungsgetriebe 200 eine mechanische Überlastschutzvorrichtung 290 zugeordnet. Diese ist dazu ausgebildet, das Untersetzungsgetriebe 200 im Betrieb der Handwerkzeugmaschine 100 zu limitieren, falls ein von der Antriebswelle 120 auf das Untersetzungsgetriebe 200 übertragenes Drehmoment einen maschinenspezifischen Grenzwert überschreitet. Der maschinenspezifische Grenzwert ist größer als ein maximaler, von dem Benutzer der Handwerkzeugmaschine 100 über die Drehmomentkupplung 199 einstellbarer Schwellwert.

Es wird darauf hingewiesen, dass im Kontext der vorliegenden Erfindung unter einer Limitierung des Untersetzungsgetriebes 200 durch die Überlastschutzvorrichtung 290 zu verstehen ist, dass durch die Überlastschutzvorrichtung 290 ein von dem Untersetzungsgetriebe 200 auf die Antriebswelle 120 übertragenes Drehmoment bei einer Blockierung der Antriebswelle 120, z. B. bei harten Schraubfällen, zumindest reduziert wird, um eine hierbei von der Antriebswelle 120 auf das Getriebegehäuse 205 und somit das Werkzeuggehäuse 105 übertragene Rotationsenergie zu begrenzen. Darüber hinaus wird darauf hingewiesen, dass Funktionsweise und Aufbau einer geeigneten Drehmomentkupplung dem Fachmann hinreichend bekannt sind, sodass hier zwecks Knappheit der Beschreibung auf eine eingehende Beschreibung der Drehmomentkupplung 199 verzichtet wird.

Fig. 2 zeigt den Ausschnitt 210 der Handwerkzeugmaschine 100 von Fig. 1. Dieser verdeutlicht eine beispielhafte Ausgestaltung des als Planetengetriebe ausgeführten Untersetzungsgetriebes 200 von Fig. 1, dessen Getriebegehäuse 205 illustrativ einen Gehäuserückabschnitt 258 und einen Gehäusevorderabschnitt 259 aufweist. Der Gehäuserückabschnitt 258 kann hierbei z. B. von dem Motorgehäuse 185 von Fig. 1 ausgebildet sein.

Das Planetengetriebe 200 weist illustrativ drei in dem Getriebegehäuse 205 angeordnete Planetenstufen auf: eine vordere Stufe 270, eine mittlere Stufe 271 und eine hintere Stufe 272. Die vordere Planetenstufe 270 ist mit der Antriebswelle 120 von Fig. 1 verbunden und wird hier lediglich von einem beispielhaften Sonnenrad 203 repräsentiert. Die mittlere Planetenstufe 271 hat beispielhaft ein Sonnenrad 213, mindestens ein erstes und ein zweites Planetenrad 217 und 219, einen Planetenträger 214, sowie ein axial unbeweglich, aber radial beweglich im Getriebegehäuse 205 angeordnetes Hohlrad 216. Der Planetenträger 214 bildet das Sonnenrad 203 der vorderen Planetenstufe 270 aus, wobei das Sonnenrad 203 am Planetenträger 214 auf geeignete Art und Weise befestigt sein kann oder an diesem angeformt bzw. einstückig mit diesem ausgebildet sein kann. Illustrativ ist der Planetenträger 214 zumindest abschnittsweise innerhalb eines drehfest mit dem Getriebegehäuse 205 verbundenen Fixierrings 209 angeordnet, der eine Haltekontur 269 aufweist und den Planetenträger 214 axial unbeweglich, aber radial beweglich im Getriebegehäuse 205 fixiert. Die hintere Planetenstufe 272 hat beispielhaft ein Sonnenrad 223, mindestens ein erstes und ein zweites Planetenrad 227 und 229, einen Planetenträger 224, sowie ein axial unbewegliches Hohlrad 226. Dieses ist illustrativ zumindest abschnittsweise innerhalb eines ringförmigen Rastkörpers 206 angeordnet, der drehfest mit dem Getriebegehäuse 205 verbunden ist. Das Sonnenrad 223 wird z. B. von einem dem Motor 180 von Fig. 1 zugeordneten Ritzel ausgebildet, das das Planetengetriebe 200 im Betrieb der Handwerkzeugmaschine 100 von Fig. 1 antreibt. Der Planetenträger 224 bildet das Sonnenrad 213 der mittleren Planetenstufe 271 aus, wobei das Sonnenrad 213 am Planetenträger 224 auf geeignete Art und Weise befestigt sein kann oder an diesem angeformt bzw. einstückig mit diesem ausgebildet sein kann.

Gemäß einer Ausführungsform ist das Planetengetriebe 200 wie bei Fig. 1 beschrieben über die Gangschaltung 260 von Fig. 1 zwischen einem ersten und einem zweiten Gang umschaltbar. Hierzu ist der Gangschaltung 260 ein am Planetengetriebe 200 angeordnetes, axial verschiebbares und radial bewegliches Schaltrad 266 zugeordnet, das über eine zugeordnete Mitnahmekontur 268 drehfest mit dem Hohlrad 216 der mittleren Planetenstufe 271 verbunden ist.

Das Schaltrad 266 ist gemäß einer Ausführungsform durch Betätigung des Betätigungselements 230 von Fig. 1 in axialer Richtung des Getriebegehäuses 205 von einer ersten in eine zweite Betriebsposition verschiebbar, wobei die erste Betriebsposition z. B. dem ersten Gang und die zweite Betriebsposition z. B. dem zweiten Gang des Planetengetriebes 200 zugeordnet ist. In seiner ersten Betriebsposition ist das Schaltrad 266 drehfest mit dem Planetenträger 224 der hinteren Planetenstufe 272 verbunden, sodass dieser Planetenträger 224 und das Hohlrad 216 der mittleren Planetenstufe 271 drehfest miteinander verbunden sind. Hierdurch wird die mittlere Planetenstufe 271 deaktiviert, sodass der erste Gang mit vergleichsweise hohem Drehmoment aktiviert ist. In seiner zweiten Betriebsposition, die in Fig. 2 und 3 gezeigt ist, ist das Schaltrad 266 durch ein Eingreifen von dessen Mitnahmekontur 268 in die Haltekontur 269 des Fixierrings 209 drehfest mit diesem und somit dem Getriebegehäuse 205 verbunden, sodass das Hohlrad 216 der mittleren Planetenstufe 271 drehfest im Getriebegehäuse 205 fixiert wird. Hierdurch wird die mittlere Planetenstufe 271 aktiviert, sodass der zweite Gang mit vergleichsweise niedrigem Drehmoment aktiviert ist.

Da der Aufbau und die Funktionsweise eines Planetengetriebes mit Gangumschaltung dem Fachmann hinreichend bekannt sind, wird hier zwecks Knappheit der Beschreibung auf eine weitere Beschreibung hiervon verzichtet.

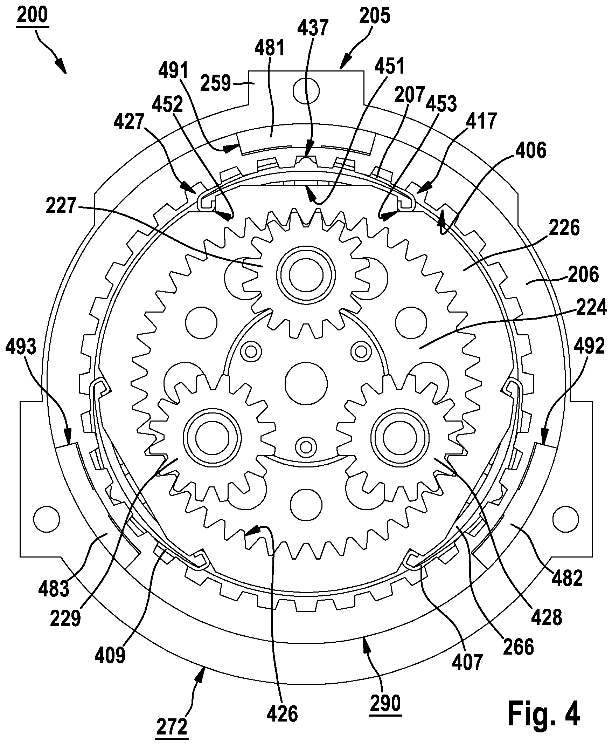

Gemäß einer Ausführungsform ist der ringförmige Rastkörper 206, in dem das Hohlrad 226 der hinteren Planetenstufe 272 zumindest abschnittsweise angeordnet ist, der Überlastschutzvorrichtung 290 von Fig. 1 zugeordnet und wird illustrativ durch einen am Gehäusevorderabschnitt 259 des Getriebegehäuses 205 befestigten Haltering 267 zumindest innerhalb vorgegebener Toleranzen axial unbeweglich im bzw. am Getriebegehäuse 205 fixiert. An dem Hohlrad 226 ist beispielhaft mindestens ein der Überlastschutzvorrichtung 290 zugeordnetes Rastfederelement 207 (sowie 407, 409 in Fig. 4) angeordnet, über das das Hohlrad 226 mit dem Rastkörper 206 und somit mit dem Getriebegehäuse 205 gekoppelt ist, wie unten bei Fig. 4 beschrieben.

Die Überlastschutzvorrichtung 290 ist bevorzugt einer Planetenstufe zugeordnet, die weder mit der Gangschaltung 260 noch mit der Drehmomentkupplung 199 von Fig. 1 unmittelbar verbunden ist. Besonders bevorzugt ist die Überlastschutzvorrichtung 290 einer Planetenstufe zugeordnet, die dem Motor 180 von Fig. 1 zugewandt ist. Dementsprechend ist die Überlastschutzvorrichtung 290 in Fig. 2 illustrativ der hinteren Planetenstufe 272 zugeordnet, die dem Motor 180 von Fig. 1 zugewandt ist und weder mit der Gangschaltung 260 noch mit der Drehmomentkupplung 199 von Fig. 1 unmittelbar verbunden ist.

Fig. 3 zeigt den Ausschnitt 210 der Handwerkzeugmaschine 100 von Fig. 1 und 2 in perspektivischer Ansicht. Fig. 3 verdeutlicht die axiale Fixierung des Rastkörpers 206 der Überlastschutzvorrichtung 290 durch den Haltering 267 am Getriebegehäuse 205. Darüber hinaus verdeutlicht Fig. 3 eine am Innenumfang des Hohlrads 226 der hinteren Planetenstufe 272 vorgesehene Verzahnung 426, die im Wirkeingriff mit den Planetenrädern 227, 229 steht, sowie die drehfeste Verbindung des Schaltrads 266 über seine Mitnahmekontur 268 mit dem Hohlrad 216 der mittleren Planetenstufe 271 sowie mit dem Fixierring 209 über dessen Haltekontur 269, im zweiten Gang der Handwerkzeugmaschine 100 von Fig. 1.

Gemäß einer Ausführungsform weist der ringförmige Rastkörper 206 der Überlastschutzvorrichtung 290 an seinem Innenumfang eine Rastverzahnung 406 und an seinem Außenumfang radiale Aussparungen 491, 493 (und 492 in Fig. 4) auf. In diese greifen illustrativ Vorsprünge 481, 483 (und 482 in Fig. 4) ein, die an dem Gehäusevorderabschnitt 259 des Getriebegehäuses 205 vorgesehen sind, sodass der Rastkörper 206 drehfest mit dem Getriebegehäuse 205 verbunden ist. Die Rastverzahnung 406 ist mit dem der Überlastschutzvorrichtung 290 zugeordneten Rastfederelement 207 (sowie 407, 409 in Fig. 4) gekoppelt, wie unten bei Fig. 4 beschrieben.

Fig. 4 zeigt einen Schnitt durch die hintere Planetenstufe 272 des Planetengetriebes 200 von Fig. 2 und 3, wobei zur Vereinfachung der Zeichnung auf eine Darstellung des Sonnenrads 223 verzichtet wurde. Fig. 4 zeigt ein weiteres Planetenrad 428 der hinteren Planetenstufe 272 und verdeutlicht die Ausbildung der radialen Aussparungen 491, 493 sowie einer weiteren radialen Aussparung 492 am ringförmigen Rastkörper 206, in die die am Getriebegehäuse 205 vorgesehenen Vorsprünge 481 bzw. 483 sowie ein weiterer Vorsprung 482 zur drehfesten Befestigung eingreifen.

Gemäß einer Ausführungsform sind am Außenumfang des Hohlrads 226 der hinteren Planetenstufe 272 mindestens eine Abflachung 451 sowie mindestens zwei zugeordnete Aussparungen 452, 453 vorgesehen, die z. B. rechtwinkelig ausgebildet und der Überlastschutzvorrichtung 290 von Fig. 2 und 3 zugeordnet sind. Im Bereich der Abflachung 451 ist illustrativ das Rastfederelement 207 angeordnet. Dieses ist beispielhaft nach Art einer geschweiften Klammer mit einer etwa zentralen Rastnase 437 und abgerundeten Endbereichen 427, 417 ausgebildet, die in den Aussparungen 452 bzw. 453 frei beweglich gelagert sind. Hierbei ist der abgerundete Endbereich 427 mit einer vorgegebenen Federspannung in Richtung des abgerundeten Endbereichs 417 beaufschlagt und der Endbereich 417 ist in Richtung des Endbereichs 427 beaufschlagt. Hierdurch ist das Rastfederelement 207 nach radial auswärts federnd am Hohlrad 226 gelagert, sodass die Rastnase 437 im Normalbetrieb der Handwerkzeugmaschine 100 von Fig. 1 im Wirkeingriff mit der Rastverzahnung 406 des ringförmigen Rastkörpers 206 steht.

Es wird darauf hingewiesen, dass in Fig. 4 illustrativ zwei weitere Rastfederelemente 407, 409 gezeigt sind, die im Bereich von Abflachungen und Aussparungen angeordnet sind, die ähnlich ausgebildet sind wie die Abflachung 451 und die Aussparungen 452, 452. Zwecks Einfachheit und Übersichtlichkeit der Zeichnung wurde jedoch auf eine Kennzeichnung dieser Abflachungen und Aussparungen verzichtet. Des Weiteren wird darauf hingewiesen, dass die drei Rastfederelemente 207, 407, 409 beispielhaft jeweils um einen Winkel von 120° zueinander versetzt angeordnet sind. Allerdings sind auch andere Anordnungen sowie eine andere Anzahl von Rastfederelementen möglich. Z. B. können lediglich zwei Rastfederelemente Anwendung finden, die beispielsweise um einen Winkel von 180° zueinander versetzt sind, wobei ab einer Verwendung von zwei Rastfederelementen eine schwimmende Lagerung des Hohlrads 226 im ringförmigen Rastkörper 206 erreicht werden kann.

Darüber hinaus wird darauf hingewiesen, dass auch die radial auswärts federnden Rastfederelemente 207, die in die am Innenumfang des ringförmigen Rastkörpers 206 vorgesehene Rastverzahnung 406 eingreifen, lediglich beispielhaft beschrieben sind und durch andere, gleichwertige Lösungen ersetzbar sind. Z. B. können alternativ hierzu am Innenumfang des Rastkörpers 406 radial einwärts federnde Rastfederelemente angeordnet sein, die in eine am Außenumfang des Hohlrads 226 vorgesehene Rastverzahnung eingreifen.

Im Normalbetrieb der Handwerkzeugmaschine 100 von Fig. 1 ist das Hohlrad 226 über die Rastfederelemente 207, 407, 409 durch deren in die Rastverzahnung 406 des ringförmigen Rastkörpers 206 eingreifende Rastnasen 437 drehfest mit diesem verbunden und somit drehfest mit dem Getriebegehäuse 205 gekoppelt. Somit können die Planetenräder 227, 229, 428 entlang der am Innenumfang des Hohlrads 226 vorgesehenen Verzahnung 426 rotieren, wenn diese von dem Sonnenrad 223 von Fig. 2 und 3 angetrieben werden, wobei ein vom Antriebsmotor 180 von Fig. 1 erzeugtes und von dem Planetengetriebe 200 untersetztes Drehmoment auf die Antriebswelle 120 von Fig. 1 übertragen wird.

Für den Fall eines zumindest teilweise Blockierens der Antriebswelle 120 von Fig. 1, z. B. bei harten Schraubfällen, wird dieses Drehmoment zumindest teilweise von der Antriebswelle 120 auf das Untersetzungsgetriebe 200 und somit auf das Getriebegehäuse 205 und das Werkzeuggehäuse 105 von Fig. 1 zurück übertragen. Falls das zurück übertragene Drehmoment hierbei einen maschinenspezifischen Grenzwert überschreitet, der z. B. u. a. durch eine ausgewählte Steifigkeit bzw. Federkraft der Rastfederelemente 207, 407, 409 und/oder Ausgestaltung der Rastverzahnung 406 vorgebbar ist, rutschen die Rastnasen 437 durch eine elastische Verformung der Rastfederelemente 207, 407, 409 aus dem Wirkeingriff mit der Rastverzahnung 406 heraus.

Bei einer derartigen elastischen Verformung werden die Rastnasen 437 der Rastfederelemente 207, 407, 409 gegen deren Federkraft radial einwärts in Richtung der zugeordneten Abflachungen 451 gedrückt, sodass in Abhängigkeit von einer jeweiligen Drehrichtung des Hohlrads 226 jeweils einer der abgerundeten Endbereiche 417 oder 427 in tangentialer Richtung des Hohlrads 226 gesehen auswärts gedrückt wird. Somit kann sich das Hohlrad 226 in dem Getriebegehäuse 205 zumindest solange um eine der Antriebswelle 120 von Fig. 1 zugeordnete Längsachse drehen, bis das zurück übertragene Drehmoment den maschinenspezifischen Grenzwert wieder unterschreitet. Dies wird im Kontext der vorliegenden Erfindung wie oben beschrieben als eine Limitierung des Planetengetriebes 200 bezeichnet.

## Patentansprüche

1. Handwerkzeugmaschine (100) mit einem von einem Motor (180) antreibbaren Untersetzungsgetriebe (200) zum Antrieb einer Antriebswelle (120), wobei das Untersetzungsgetriebe (200) in einem Getriebegehäuse (205) angeordnet ist und über eine Gangschaltung (230, 260) mindestens zwischen einem ersten Gang mit vergleichsweise hohem Drehmoment und einem zweiten Gang mit vergleichsweise niedrigem Drehmoment umschaltbar ist, **dadurch gekennzeichnet, dass** dem Untersetzungsgetriebe (200) eine Drehmomentkupplung (199) und eine mechanische Überlastschutzvorrichtung (290) zugeordnet sind, wobei die Drehmomentkupplung (199) dazu ausgebildet ist, ein Antreiben der Antriebswelle (120) durch das Untersetzungsgetriebe (200) im Betrieb der Handwerkzeugmaschine (100) zu verhindern, falls ein von der Antriebswelle (120) auf das Untersetzungsgetriebe (200) übertragenes Drehmoment einen von einem Benutzer der Handwerkzeugmaschine (100) einstellbaren Schwellwert überschreitet, und wobei die Überlastschutzvorrichtung (290) dazu ausgebildet ist, das Untersetzungsgetriebe (200) im Betrieb der Handwerkzeugmaschine (100) zu limitieren, falls ein von der Antriebswelle (120) auf das Untersetzungsgetriebe (200) übertragenes Drehmoment einen maschinenspezifischen Grenzwert überschreitet, der größer ist als ein maximaler, von dem Benutzer der Handwerkzeugmaschine (100) einstellbarer Schwellwert.

2. Handwerkzeugmaschine nach Anspruch 1, **dadurch gekennzeichnet, dass** das Untersetzungsgetriebe (200) nach Art eines Planetengetriebes mit mindestens drei Planetenstufen (270, 271, 272) ausgebildet ist, wobei die Überlastschutzvorrichtung (290) einer Planetenstufe (272) zugeordnet ist, die weder mit der Gangschaltung (230, 260) noch mit der Drehmomentkupplung (199) unmittelbar verbunden ist.

3. Handwerkzeugmaschine nach Anspruch 2, **dadurch gekennzeichnet, dass** die Planetenstufe (272), der die Überlastschutzvorrichtung (290) zugeordnet ist, dem Motor (180) zugewandt ist.

4. Handwerkzeugmaschine nach Anspruch 2 oder 3, **dadurch gekennzeichnet, dass** die Planetenstufe (272), der die Überlastschutzvorrichtung (290) zugeordnet ist, ein Hohlrad (226) aufweist, das über mindestens ein Rastfederelement (207, 407, 409) mit dem Getriebegehäuse (205) gekoppelt ist.

5. Handwerkzeugmaschine nach Anspruch 4, **dadurch gekennzeichnet, dass** das Hohlrad (226) für den Fall eines von der Antriebswelle (120) auf das Untersetzungsgetriebe (200) übertragenen Drehmoments bis zum Erreichen des maschinenspezifischen Grenzwerts drehfest in dem Getriebegehäuse (205) angeordnet ist und sich bei Überschreiten des maschinenspezifischen Grenzwerts in dem Getriebegehäuse (205) um eine der Antriebswelle (120) zugeordnete Längsachse drehen kann.

6. Handwerkzeugmaschine nach Anspruch 4 oder 5, **dadurch gekennzeichnet, dass** das mindestens eine Rastfederelement (207, 407, 409) radial auswärts federnd an dem Hohlrad (226) angeordnet ist.

7. Handwerkzeugmaschine nach Anspruch 4 oder 5, **dadurch gekennzeichnet, dass** das mindestens eine Rastfederelement (207, 407, 409) radial einwärts federnd gegen das Hohlrad (226) beaufschlagt ist.

8. Handwerkzeugmaschine nach einem der Ansprüche 4 bis 7, **dadurch gekennzeichnet, dass** in radialer Richtung zwischen dem Hohlrad (226) und dem Getriebegehäuse (205) ein drehfest mit dem Getriebegehäuse (205) verbundener Rastkörper (206) vorgesehen ist.

## Claims

1. Portable power tool (100), having a step-down transmission (200), drivable by a motor (180), for driving a drive shaft (120), wherein the step-down transmission (200) is arranged in a transmission housing (205) and is shiftable at least between a first gear with a relatively high torque and a second gear with a relatively low torque via a gear shift (230, 260), **characterized in that** the step-down transmission (200) is assigned a torque clutch (199) and a mechanical overload protection device (290), wherein the torque clutch (199) is configured to prevent the drive shaft (120) from being driven by the step-down transmission (200) during operation of the portable power tool (100) if a torque transmitted from the drive shaft (120) to the step-down transmission (200) exceeds a threshold value that is settable by a user of the portable power tool (100), and wherein the overload protection device (290) is configured to limit the step-down transmission (200) during operation of the portable power tool (100) if a torque transmitted from the drive shaft (120) to the step-down transmission (200) exceeds a machine-specific limit value which is greater than a maximum threshold value that is settable by the user of the portable power tool (100).

2. Portable power tool according to Claim 1, **characterized in that** the step-down transmission (200) is configured in the manner of a planetary transmission with at least three planetary stages (270, 271, 272), wherein the overload protection device (290) is assigned to a planetary stage (272) which is immediately connected to neither the gear shift (230, 260) nor the torque clutch (199).

3. Portable power tool according to Claim 2, **characterized in that** the planetary stage (272) to which the overload protection device (290) is assigned faces the motor (180).

4. Portable power tool according to Claim 2 or 3, **characterized in that** the planetary stage (272) to which the overload protection device (290) is assigned has a ring gear (226) which is coupled to the transmission housing (205) via at least one latching spring element (207, 407, 409).

5. Portable power tool according to Claim 4, **characterized in that** the ring gear (226), in the event of a torque transmitted from the drive shaft (120) to the step-down transmission (200), is arranged in the transmission housing (205) in a rotationally fixed manner until the machine-specific limit value is reached, and can rotate in the transmission housing (205) about a longitudinal axis assigned to the drive shaft (120) when the machine-specific limit value is exceeded.

6. Portable power tool according to Claim 4 or 5, **characterized in that** the at least one latching spring element (207, 407, 409) is arranged on the ring gear (226) in a spring-loaded manner radially towards the outside.

7. Portable power tool according to Claim 4 or 5, **characterized in that** the at least one latching spring element (207, 407, 409) is urged against the ring gear (226) in a spring-loaded manner radially towards the inside.

8. Portable power tool according to one of Claims 4 to 7, **characterized in that** a latching body (206) connected to the transmission housing (205) in a rotationally fixed manner is provided in a radial direction between the ring gear (226) and the transmission housing (205).

## Revendications

1. Machine-outil à main (100) comprenant un démultiplicateur (200) pouvant être entraîné par un moteur (180) pour l'entraînement d'un arbre d'entraînement (120), le démultiplicateur (200) étant disposé dans un boîtier de transmission (205) et pouvant être commuté par le biais d'un changement de vitesses (230, 260) au moins entre une première vitesse à couple relativement élevé et une deuxième vitesse à couple relativement bas, **caractérisée en ce qu'**un embrayage de transmission de couple (199) et un dispositif de protection contre les surcharges (290) sont associés au démultiplicateur (200), l'embrayage de transmission de couple (199) étant réalisé de manière à empêcher un entraînement de l'arbre d'entraînement (120) par le démultiplicateur (200) pendant le fonctionnement de la machine-outil à main (100), si un couple transmis de l'arbre d'entraînement (120) au démultiplicateur (200) dépasse une valeur seuil pouvant être ajustée par un utilisateur de la machine-outil à main (100), et le dispositif de protection contre les surcharges (290) étant réalisé de manière à limiter le démultiplicateur (200) pendant le fonctionnement de la machine-outil à main (100) si un couple transmis de l'arbre d'entraînement (120) au démultiplicateur (200) dépasse une valeur limite spécifique de la machine qui est supérieure à une valeur seuil pouvant être ajustée par l'utilisateur de la machine-outil à main (100).

2. Machine-outil à main selon la revendication 1, **caractérisée en ce que** le démultiplicateur (200) est réalisé à la manière d'un engrenage planétaire ayant au moins trois étages planétaires (270, 271, 272), le dispositif de protection contre les surcharges (290) étant associé à un étage planétaire (272) qui n'est raccordé directement ni au changement de vitesses (230, 260) ni à l'embrayage de transmission de couple (199).

3. Machine-outil à main selon la revendication 2, **caractérisée en ce que** l'étage planétaire (272) auquel est associé le dispositif de protection contre les surcharges (290) est tourné vers le moteur (180).

4. Machine-outil à main selon la revendication 2 ou 3, **caractérisée en ce que** l'étage planétaire (272) auquel est associé le dispositif de protection contre les surcharges (290) présente une couronne (226) qui est accouplée au boîtier de transmission (205) par le biais d'au moins un élément à ressort d'encliquetage (207, 407, 409).

5. Machine-outil à main selon la revendication 4, **caractérisée en ce que** la couronne (226), dans le cas d'un couple transmis de l'arbre d'entraînement (120) au démultiplicateur (200), jusqu'à l'obtention de la valeur limite spécifique à la machine, est disposée de manière solidaire en rotation dans le boîtier de transmission (205) et en cas de dépassement de la valeur limite spécifique de la machine, peut tourner dans le boîtier de transmission (205) autour d'un axe longitudinal associé à l'arbre d'entraînement (120).

6. Machine-outil à main selon la revendication 4 ou 5, **caractérisée en ce que** l'au moins un élément de ressort d'encliquetage (207, 407, 409) est disposé sur la couronne (226) avec effet de ressort radialement vers l'extérieur.

7. Machine-outil à main selon la revendication 4 ou 5, **caractérisée en ce que** l'au moins un élément de ressort d'encliquetage (207, 407, 409) est sollicité avec effet de ressort radialement vers l'intérieur contre la couronne (226).

8. Machine-outil à main selon l'une quelconque des revendications 4 à 7, **caractérisée en ce que** dans la direction radiale entre la couronne (226) et le boîtier de transmission (205) est prévu un corps d'encliquetage (206) connecté de manière solidaire en rotation au boîtier de transmission (205).
